# EUROPEAN PATENT SPECIFICATION

(11) **EP 3 527 465 B1**
(45) Date of publication and mention of the grant of the patent: **28.04.2021**
(21) Application number: 19156836.9
(22) Date of filing: 13.02.2019
(51) Int. Cl.: B62D 21/15, B62D 25/20

(54) **VEHICLE BODY STRUCTURE**
FAHRZEUGKAROSSERIESTRUKTUR
STRUCTURE DE CARROSSERIE DE VÉHICULE

(30) Priority: 15.02.2018 JP 2018025395
(43) Date of publication of application: 21.08.2019
(73) Proprietor: TOYOTA JIDOSHA KABUSHIKI KAISHA, Toyota-shi Aichi-ken, 471-8571 (JP)
(72) Inventor: NAKAMURA, Haruki, TOYOTA-SHI, AICHI-KEN, 471-8571 (JP)
(74) Representative: Cabinet Beau de Loménie

(56) References cited:
- WO-A1-2016/129065
- WO-A1-2017/082125
- DE-A1-102016 000 366
- FR-A1- 2 972 169
- US-A1- 2010 052 368

## Description

### TECHNICAL FIELD

The present disclosure relates to a vehicle body structure, and more particularly, relates to a vehicle body structure which improves collision-resistant performance of a pair of side members provided on both left and right sides of a vehicle body and extending in a vehicle front-rear direction.

### BACKGROUND

For impact-resistant performance or the like, an underbody forming the floor-face-side framework of a vehicle is provided with a pair of side members which are provided on both sides of a vehicle in width direction and which extend in a vehicle front-rear direction. While the pair of side members extend substantially straight along the vehicle front-rear direction in a top view, the distance between the pair of side members is widened in the vehicle width direction, for example, in order to widen a battery mounting space.

For example, JP 2014-12524 A describes a structure in which the distance between a pair of side members provided on both left and right sides of the body of an electric vehicle and extending in a vehicle front-rear direction expands in a vehicle width direction from a vehicle front side toward a vehicle rear side, and a battery pack is disposed in the wide region.

Documents FR2972169 and US2010/052368 each disclosing the preamble of the independent claim present other examples of known vehicle body structures.

### SUMMARY

### TECHNICAL PROBLEM

If a vehicle is subjected to impact of a front collision, a side collision, or the like, a pair of side members provided on both left and right sides of a vehicle body and extending in a vehicle front-rear direction are deformed, and in some cases, a vehicle interior space can be significantly narrowed. Particularly if the distance between the pair of side members is widened in a vehicle width direction, the side members are shaped to be tilted and thus bent to a vehicle outer side from a vehicle front side toward a vehicle rear side in a top view. If subjected to impact, the side members can be broken at an inflection point of bending. Therefore, there is demand for a vehicle body structure which improves impact-resistant performance of a pair of side members having tilted portions tilted to a vehicle outer side from a vehicle front side toward a vehicle rear side in a top view.

### SOLUTION TO PROBLEM

A vehicle body structure according to the present disclosure comprises: a left side floor member and a right side floor member having tilted portions tilted to a vehicle outer side from a vehicle front side toward a vehicle rear side in a top view; and a brace portion connecting a left tilted portion which is the tilted portion of the left side floor member and a right tilted portion which is the tilted portion of the right side floor member.

According to the configuration described above, the brace portion connects the pair of tilted portions which are easily broken when the pair of floor members are subjected to impact. The floor members do not cope with the impact alone, but the brace portion and the pair of floor members cope with the impact as a whole. Consequently, impact-resistant performance of the vehicle body is improved.

In the vehicle body structure according to the present disclosure, the brace portion includes a first brace member in which left and right ends respectively fixed to the left tilted portion and the right tilted portion are tilted toward the vehicle rear side from a central portion, a second brace member which is provided closer to the vehicle rear side than the first brace member and which has left and right ends respectively fixed to the left tilted portion and the right tilted portion, and a cross-shaped third brace member which links the left end of the first brace member and the right end of the second brace member and links the right end of the first brace member and the left end of the second brace member.

According to the configuration described above, the brace portion has three brace members combined with one another, and a plurality of triangular and polygonal truss shapes are therefore formed. Impact-resistant performance of the vehicle body is improved compared with the case where three rod members each independently connect the left tilted portion and the right tilted portion.

In the vehicle body structure according to the present disclosure, it is preferable that a left first fixing portion and a left second fixing portion which is closer to the vehicle rear side than the left first fixing portion are provided in the left tilted portion, a right first fixing portion and a right second fixing portion which is closer to the vehicle rear side than the right first fixing portion are provided in the right tilted portion, and in the brace portion, the first brace member is fixed to the left first fixing portion and the right first fixing portion, the second brace member is fixed to the left second fixing portion and the right second fixing portion, and the third brace member includes a first oblique brace member fixed to the left first fixing portion and the right second fixing portion, and a second oblique brace member fixed to the left second fixing portion and the right first fixing portion.

According to the configuration described above, the directions in which the first brace member, the second brace member, the first oblique brace member, and the second oblique brace member extend can be different from one another, and it becomes possible to cope with a wide range of impact directions. For example, impact-resistant performance for a front collision and a side collision can be improved by the brace portion having the same structure.

It is preferable that the vehicle body structure according to the present disclosure comprises: a tunnel portion which is disposed between the left side floor member and the right side floor member in the vehicle width direction and which projects to a vehicle upper side with respect to a floor panel and extends in a vehicle front-rear direction; and a pair of left and right tunnel reinforcements respectively provided on a vehicle lower side on both edges of the vehicle width direction in the tunnel portion, wherein the first brace member, the second brace member, and the third brace member are fixed to each of the pair of left and right tunnel reinforcements.

According to the configuration described above, the brace portion is fixed to the left tilted portion and the right tilted portion, and also fixed to the tunnel reinforcements. Consequently, impact-resistant performance of the vehicle body is further improved because each of the vertexes of the plurality of triangular and polygonal truss shapes is fixed.

According to the vehicle body structure having the configuration described above, it is possible to improve impact-resistant performance of a pair of side members having tilted portions tilted to a vehicle outer side from a vehicle front side toward a vehicle rear side in a top view.

### BRIEF DESCRIPTION OF DRAWINGS

Embodiment(s) of the present disclosure will be described based on the following figures, wherein:
FIG. 1A is a view showing the position where a high-capacity battery is disposed in a vehicle to which a vehicle body structure according to an embodiment is applied;
FIG. 1B is a bottom view in which the vehicle in FIG. 1A is seen from an IB direction;
FIG. 2 is a detail view of a II part in FIG. 1B;
FIG. 3 is a cross sectional view taken along the III-III' line in FIG. 2;
FIG. 4 is a view showing a state in the case where the vehicle body structure according to the embodiment is subjected to a front collision;
FIG. 5 is a view showing the function and effects of a brace portion in FIG. 4;
FIG. 6 is a view showing a state in the case where the vehicle body structure according to the embodiment is subjected to a side collision;
FIG. 7 is a view showing the function and effects of the brace portion in FIG. 6;
FIG. 8 is a view showing a result of a simulation performed with regard to damage in the case where a vehicle body structure having no brace portion is subjected to a front collision, as a comparative example;
FIG. 9 is a view showing a result of a simulation performed with regard to damage in the case where the vehicle body structure according to the embodiment is subjected to a front collision under the same conditions as that in FIG. 8;
FIG. 10 is a view corresponding to FIG. 1B, and is an example of a bottom view of a vehicle body structure in the case where a brace portion is provided in a conventional technique comprising a floor member having no tilted portion;
FIG. 11 is a view showing a result of a simulation performed with regard to damage in the case where the vehicle body structure according to the conventional technique is subjected to a front collision, and then a front wheel directly hits the floor member; and
FIG. 12 is a view corresponding to FIG. 11, and shows a result of a simulation performed with regard to damage in the case where a front wheel directly hits a floor member in response to a front collision when a brace portion is removed from a vehicle body structure comprising a floor member having a tilted portion.

### DESCRIPTION OF EMBODIMENTS

An embodiment according to the present disclosure is described in detail below with reference to the drawings. Hereinafter, a vehicle is a three-box type having a front side, a vehicle interior side, and a rear side, and has a front side member on the front side, a rear side member on the rear side, and a floor member on the vehicle interior side in between. This is an example shown for the purpose of explanation. If provided with a left side floor member and a right side floor member having tilted portions tilted to a vehicle outer side from a vehicle front side toward a vehicle rear side in a top view, any vehicle other than the three-box type is applicable. Hereinafter, it is assumed that a vehicle is equipped with a left-hand steering wheel, and subjected to impact of an offset collision which is offset to the left front side of the vehicle regarding a front collision, and subjected to impact on the vehicle left side regarding a side collision. However, this is an example shown for the purpose of explanation. Any vehicle equipped with a right-hand steering wheel is also applicable.

Shapes, materials, and others described below are examples shown for the purpose of explanation, and can be suitably changed depending on the specifications or the like of a vehicle body structure. Moreover, hereinafter, the same reference signs are given to similar elements in all the drawings, and repeated explanations are omitted.

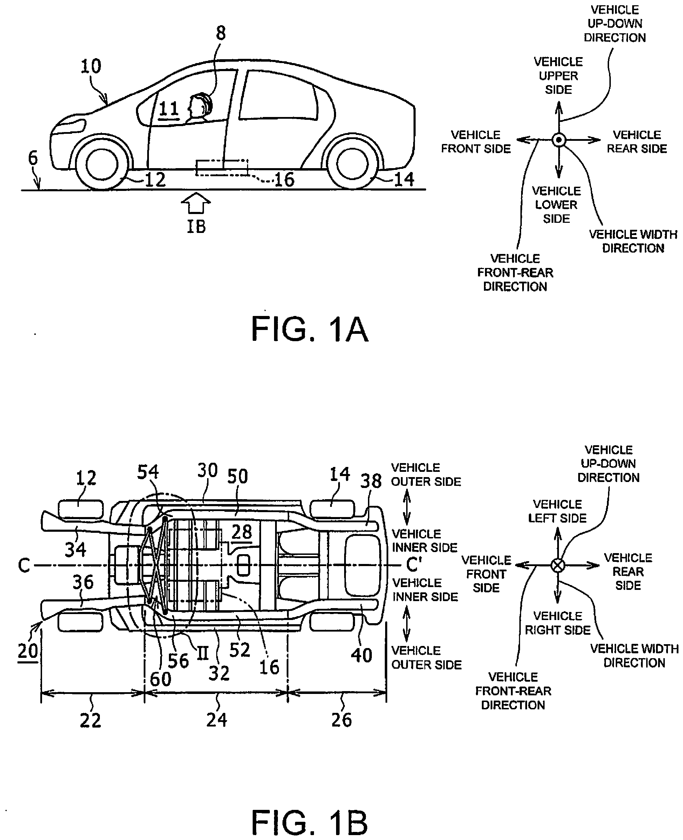

FIG. 1A is a side view of a vehicle 10. In each of the drawings below, a vehicle front-rear direction, a vehicle up-down direction, and a vehicle width direction are appropriately indicated. For the vehicle front-rear direction, a direction indicated as FR is a direction to the vehicle front side, and the opposite direction is a direction to the vehicle rear side. For the vehicle up-down direction, a direction indicated as UP is the vehicle upper side which is the upper side with respect to a road surface 6, and the opposite direction is the vehicle lower side toward the road surface 6. For the vehicle width direction, the right side of the vehicle 10 is a rightward direction, and the left side of the vehicle 10 is a leftward direction, when a user 8 in a vehicle interior 11 of the vehicle 10 is looking towards the front side of the vehicle 10 from the rear side.

FIG. 1A is equivalent to a left side view of the vehicle 10, and shows a left front wheel 12 and a left rear wheel 14 of the vehicle 10. A high-capacity battery 16 is disposed under the floor of the vehicle interior 11.

FIG. 1B is a bottom view of a vehicle body structure 20 in which the vehicle 10 in FIG. 1A is seen from an IB direction. The IB direction is a direction in which the vehicle upper side is seen from the vehicle lower side. Herein, the vehicle body structure 20 is a structure associated with an underbody, among structures associated with the body of the vehicle 10.

The respective elements in the vehicle body structure 20 are symmetrically arranged with respect to a central line C-C' along the vehicle front-rear direction. A C-side is on the vehicle front side, and a C'-side is on the vehicle rear side. Regardless of the vehicle left side and the vehicle right side in the vehicle width direction, a direction facing toward the outer side of the vehicle 10 from the central line C-C' is referred to as a vehicle outer side, and a direction toward the central line C-C' is referred to as a vehicle inner side. When the vehicle 10 is subjected to an offset collision which is offset to the vehicle outer side from the central line C-C' as a front collision or subjected to a side collision, an explanation for the right side or left side of the central line C-C' alone is enough. In the case hereinafter described, the vehicle 10 is equipped with a left-hand steering wheel, and subjected to impact of an offset collision or impact of a side collision on the left-hand steering wheel side.

The vehicle body structure 20 is broadly classified, in the vehicle front-rear direction, into a front side structure 22 which is a lower structure on the vehicle front side, a vehicle interior side structure 24 which is a lower structure of the vehicle interior 11, and a rear side structure 26 which is a lower structure on the vehicle rear side. Hereinafter, the vehicle interior side structure 24 is particularly described within the vehicle body structure 20.

A floor panel 28 is a panel member constituting the floor face of the vehicle interior 11. In the vehicle body structure 20, the floor panel 28 is a member disposed on the uppermost side. Each element in the vehicle body structure 20 is disposed on the vehicle lower side from the floor panel 28.

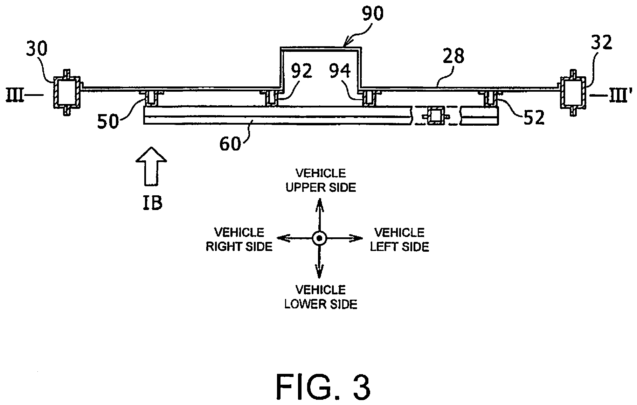

A left rocker 30 and a right rocker 32 extend in the vehicle front-rear direction under doors of the vehicle 10, have shapes surrounding hollow portions in a closed cross section (see FIG. 3), and are rigidity ensuring members in the vehicle 10. The left end of the floor panel 28 is fixed to the left rocker 30, and the right end of the floor panel 28 is fixed to the right rocker 32. Herein, fixing means fixing and thus connecting. Welding is used as a means of fixing. Depending on a fixing place, screw fastening using a bolt and a nut or using a bolt and a screw hole is used. The same also applies to "fixing" described below.

Members respectively arranged on the vehicle inner side with respect to the left rocker 30 and the right rocker 32 and then extending in the vehicle front-rear direction are referred to as side members. Parts of the side members in the front side structure 22 are a left front side member 34 and a right front side member 36. Parts of the side members in the rear side structure 26 are a left rear side member 38 and a right rear side member 40. Parts of the side members in the vehicle interior side structure 24 are a left side floor side member 50 and a right side floor side member 52. Hereinafter, the left side floor side member 50 is referred to as a left side floor member 50, and the right side floor side member 52 is referred to as a right side floor member 52.

The left side floor member 50 has a front end fixed to the left front side member 34, and a rear end fixed to the left rear side member 38. The left side floor member 50 has a left tilted portion 54 tilted to the vehicle outer side from the vehicle front side toward the vehicle rear side in a top view. In a similar way, the right side floor member 52 has a front end fixed to the right front side member 36, and a rear end fixed to the right rear side member 40. The right side floor member 52 has a right tilted portion 56 tilted to the vehicle outer side from the vehicle front side toward the vehicle rear side in a top view. The distance between the left side floor member 50 and the right side floor member 52 widens toward the vehicle interior 11 side from the front end side in the width direction due to an existence of the left tilted portion 54 and the right tilted portion 56. By use of this widened region, a high-capacity battery 16 having a larger dimension in the width direction than heretofore is disposed. It is to be noted that the vehicle body structure 20 is symmetrical with respect to the central line C-C', so that in the "top view", the vehicle left side, the vehicle right side, the vehicle outer side, and the vehicle inner side have the same meanings whether the vehicle body structure 20 is seen from the IB direction which is the upper side of the drawing of FIG. 1B or from the vehicle upper side. Hereinafter, unless otherwise specified, the bottom view seen from the IB direction is used.

If the distance between the left side floor member 50 having the left tilted portion 54 and the right side floor member 52 having the right tilted portion 56 is widened in the vehicle width direction, the left side floor member 50 and the right side floor member 52 are shaped to be tilted and thus bent to the vehicle outer side from the vehicle front side toward the vehicle rear side in a top view. If the vehicle 10 is subjected to impact of an offset collision or a side collision, the left side floor member 50 and the right side floor member 52 can be broken at the inflection point of bending. A brace portion 60 is a reinforcing member provided to connect the left tilted portion 54 and the right tilted portion 56 to improve impact-resistant performance of the left side floor member 50 and the right side floor member 52.

It is to be noted that the method of supporting the battery 16 is achieved by use of the floor panel 28, the left side floor member 50, and the right side floor member 52, and in some cases, the left rocker 30, the right rocker 32, and others, but is suitably changed depending on specifications such as the outer shape of the battery 16.

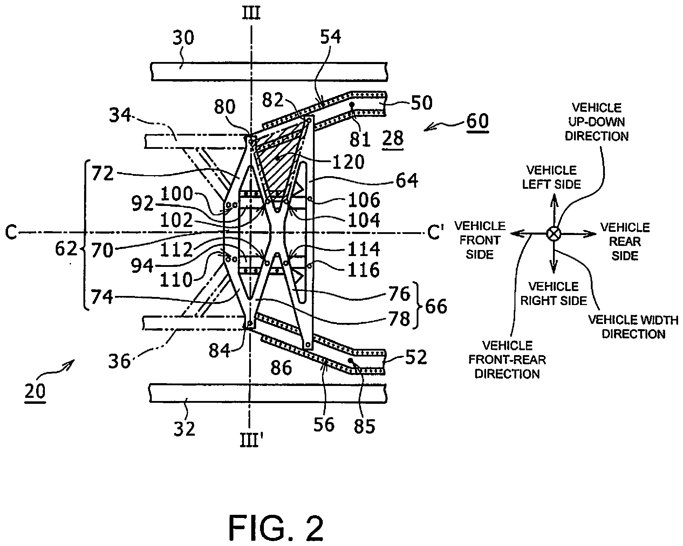

FIG. 2 is an enlarged view of a II part in FIG. 1B. The brace portion 60 is a composite member combining a first brace member 62, a second brace member 64, and a third brace member 66.

The first brace member 62 is a member disposed on a portion of the brace portion 60 that is closest to the vehicle front side. The first brace member 62 includes a central member 70 on the central line C-C' side, a left member 72 integral with the central member 70 and extending on the vehicle left side, and a right member 74 integral with the central member 70 and extending on the vehicle right side. The central member 70 is substantially perpendicular to the central line C-C', and extends parallel to the vehicle width direction. The left member 72 extends toward the vehicle rear side from the central member 70 to the vehicle left side at a tilt with respect to the central line C-C'. The right member 74 extends toward the vehicle rear side from the central member 70 to the vehicle right side at a tilt with respect to the central line C-C'.

The second brace member 64 is a member disposed on a portion of the brace portion 60 that is closest to the vehicle rear side. The second brace member 64 is substantially perpendicular to the central line C-C', and extends parallel to the vehicle width direction. In contrast to the first brace member 62, the second brace member 64 is not separated into a central member, a left member, and a right member.

The third brace member 66 includes a first oblique brace member 76, and a second oblique brace member 78 integral with the first oblique brace member 76. The first oblique brace member 76 and the second oblique brace member 78 are both members tilted with respect to the central line C-C', but are different from each other in the tilting direction, and are cross members integrated by crossing in the vicinity of the central line C-C'.

The left side floor member 50 and the right side floor member 52 have bent portions, and are easily broken when subjected to impact. According to the configuration described above, the left tilted portion 54 and the right tilted portion 56 are connected to each other by the brace portion 60. Consequently, impact-resistant performance of the vehicle body is improved because each of the left side floor member 50 and the right side floor member 52 does not cope with impact alone, but the left side floor member 50 and the right side floor member 52 that are connected and thus integrated by the brace portion 60 cope with impact as a whole.

The first brace member 62, the second brace member 64, and the third brace member 66 are all fixed to the left side floor member 50 and the right side floor member 52. The fixing relations of these members are described below.

A left first fixing member 80 and a left second fixing member 82 closer to the vehicle rear side than the left first fixing member 80 are provided in the left tilted portion 54 of the left side floor member 50. The left first fixing member 80 is provided at or in the vicinity of the front end of the left side floor member 50 where the left front side member 34 and the left side floor member 50 are fixed and thus connected to each other. If the position where the distance between the left side floor member 50 and the right side floor member 52 becomes constant after the end of the tilting of the left tilted portion 54 and the right tilted portion 56 to the vehicle outer side is a rear end 81 of the left tilted portion 54, the left second fixing member 82 is provided closer to the vehicle front side than the rear end 81 of the left tilted portion 54. In the example of FIG. 2, the left second fixing member 82 is provided substantially at an intermediate position between the rear end 81 of the left tilted portion 54 and the left first fixing member 80.

In a similar way, a right first fixing portion 84 and a right second fixing portion 86 closer to the vehicle rear side than the right first fixing portion 84 are provided in the right tilted portion 56 of the right side floor member 52. The right first fixing portion 84 is provided at or in the vicinity of the front end of the right side floor member 52 where the right front side member 36 and the right side floor member 52 are fixed and thus connected to each other. If the position where the distance between the left side floor member 50 and the right side floor member 52 becomes constant after the end of the tilting of the left tilted portion 54 and the right tilted portion 56 to the vehicle outer side is a rear end 85 of the right tilted portion 56, the right second fixing portion 86 is provided closer to the vehicle front side than the rear end 85 of the right tilted portion 56. In the example of FIG. 2, the right second fixing portion 86 is provided substantially at an intermediate position between the rear end 85 of the right tilted portion 56 and the right first fixing portion 84.

The first brace member 62 has a left end which is the tip of the left member 72 fixed to the left first fixing member 80, and a right end which is the tip of the right member 74 fixed to the right first fixing portion 84. Thus, the central member 70 which is a member of the central portion of the first brace member 62 is disposed so as to project more to the vehicle front side than both the left first fixing member 80 and the right first fixing portion 84.

The second brace member 64 has a left end extending in the vehicle width direction and fixed to the left second fixing member 82, and a right end fixed to the right second fixing portion 86. As shown in FIG. 1A, the high-capacity battery 16 is disposed on the vehicle rear side in the vicinity of the second brace member 64.

The first oblique brace member 76 of the third brace member 66 has a left end fixed to the left first fixing member 80, and a right end fixed to the right second fixing portion 86. Thus, the first oblique brace member 76 extends in an oblique direction linking the vicinity of the front end of the left side floor member 50 and the substantially intermediate position of the right tilted portion 56 of the right side floor member 52. The second oblique brace member 78 has a left end fixed to the left second fixing member 82, and a right end fixed to the right first fixing portion 84. Thus, the second oblique brace member 78 extends in an oblique direction linking the substantially intermediate position of the left tilted portion 54 of the left side floor member 50 and the vicinity of the front end of the right side floor member 52.

As described above, the brace portion 60 is configured by combining the first brace member 62, the second brace member 64, and the third brace member 66, so that a plurality of triangular and polygonal truss shapes are formed between the left tilted portion 54 and the right tilted portion 56. Consequently, impact-resistant performance of the vehicle body is improved, for example, compared with the case where three rod members each independently connect the left tilted portion 54 and the right tilted portion 56.

If the first brace member 62, the second brace member 64, and the third brace member 66 are only fixed to the left side floor member 50 and the right side floor member 52, the brace portion 60 is in a state of floating from the floor panel 28 in the vicinity of the central line C-C'. In order to fix the brace portion 60 to the floor panel 28 in the vicinity of the central line C-C', a tunnel left reinforcement 92 and a tunnel right reinforcement 94 in a tunnel portion 90 integrated with the floor panel 28 are used.

The relation among the tunnel portion 90, the tunnel left reinforcement 92, the tunnel right reinforcement 94, the floor panel 28, the left rocker 30, the right rocker 32, the left side floor member 50, the right side floor member 52, and the brace portion 60 is shown by use of FIG. 3. FIG. 3 is a cross sectional view taken along the III-III' line in FIG. 2. The IB direction described in FIG. 1A is shown in FIG. 3.

The tunnel portion 90 is disposed between the left side floor member 50 and the right side floor member 52 in the vehicle width direction, and is a structure projecting to the vehicle upper side with respect to the floor panel 28 and extending in the vehicle front-rear direction. A driving shaft of the vehicle 10, and electric power lines, signal lines, and others for the battery 16 and others are disposed in the projecting part of the tunnel portion 90.

The tunnel left reinforcement 92 and the tunnel right reinforcement 94 are provided on the vehicle lower side on both edges of the vehicle width direction in the tunnel portion 90, respectively. The tunnel left reinforcement 92 and the tunnel right reinforcement 94 are cylindrical members having cross sectional shapes called hat forms resembling a pot hat, and having flanged openings. The flanges of the hat forms are fixed to the floor panel 28. The brace portion 60 is fixed to flat parts on the top faces of the hat forms.

FIG. 3 shows the cross sectional shapes of the left side floor member 50, the right side floor member 52, the left rocker 30, the right rocker 32, and the brace portion 60. The cross sectional shapes of the left side floor member 50 and the right side floor member 52 are shapes called hat forms resembling a pot hat, like the tunnel left reinforcement 92 and the tunnel right reinforcement 94. The flanges of the hat forms are fixed to the floor panel 28. The brace portion 60 is fixed to flat parts on the top faces of the hat forms. The left rocker 30 and the right rocker 32 have shapes surrounding hollow portions in a closed cross section. The brace portion 60 also has a shape surrounding a hollow portion in a closed cross section. These members having the hat-formed cross sectional shapes and the shapes surrounding the hollow portions in a closed cross section contribute to ensuring rigidity against impact and the like in the vehicle body structure 20.

Returning to FIG. 3, the brace portion 60 is fixed to the tunnel left reinforcement 92 by fixing portions 100, 102, 104, and 106, and fixed to the tunnel right reinforcement 94 by fixing portions 110, 112, 114, and 116.

The first brace member 62 is fixed to the tunnel left reinforcement 92 by the fixing portion 100, and fixed to the tunnel right reinforcement 94 by the fixing portion 110. The fixing portion 100 fixes the vicinity of the border between the central member 70 and the left member 72 in the first brace member 62 to the tunnel left reinforcement 92. In a similar way, the fixing portion 110 fixes the vicinity of the border between the central member 70 and the right member 74 in the first brace member 62 to the tunnel right reinforcement 94. The second brace member 64 is fixed to the tunnel left reinforcement 92 by the fixing portion 106, and fixed to the tunnel right reinforcement 94 by the fixing portion 116.

The third brace member 66 is fixed to the tunnel left reinforcement 92 by the fixing portions 102 and 104, and fixed to the tunnel right reinforcement 94 by the fixing portions 112 and 114. The fixing portion 102 fixes the first oblique brace member 76 of the third brace member 66 to the tunnel left reinforcement 92. The fixing portion 104 fixes the second oblique brace member 78 of the third brace member 66 to the tunnel left reinforcement 92. The fixing portion 112 fixes the second oblique brace member 78 of the third brace member 66 to the tunnel right reinforcement 94. The fixing portion 114 fixes the first oblique brace member 76 of the third brace member 66 to the tunnel right reinforcement 94.

Thus, the brace portion 60 is fixed to the left tilted portion 54 and the right tilted portion 56, and also fixed to the tunnel left reinforcement 92 and the tunnel right reinforcement 94. Consequently, impact-resistant performance of the vehicle body is further improved because each of the vertexes of the plurality of triangular and polygonal truss shapes is fixed. In FIG. 2, one truss shape 120 is shaded and thus shown as an example.

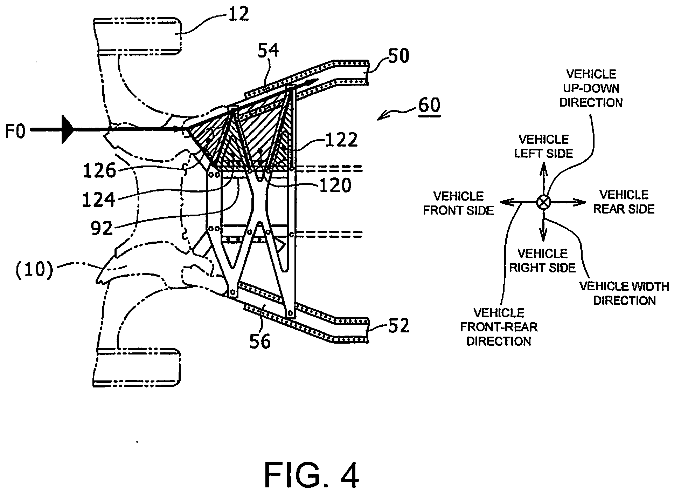

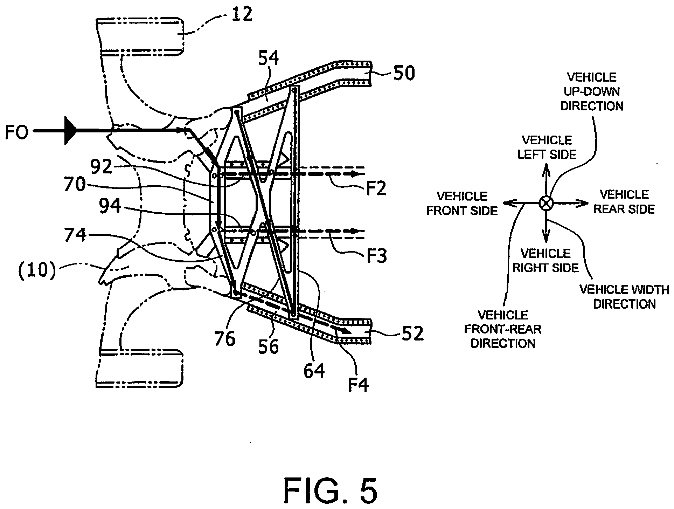

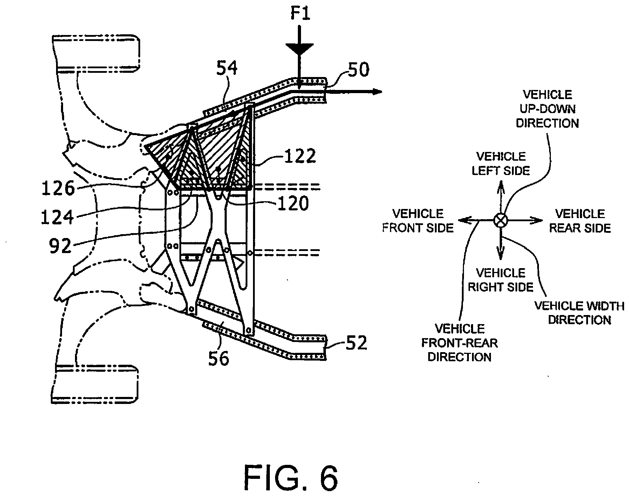

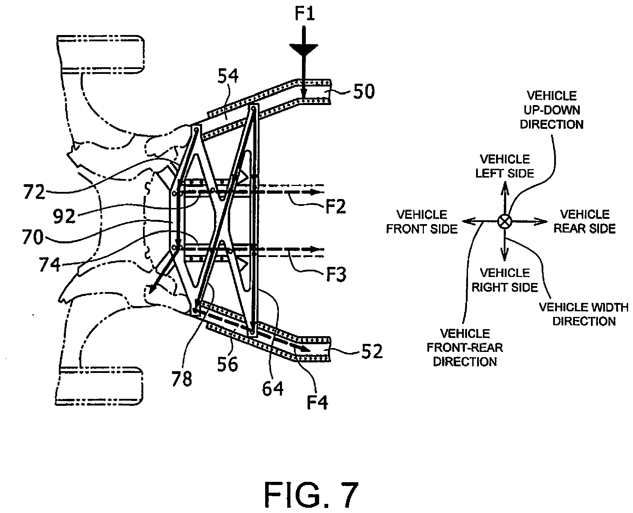

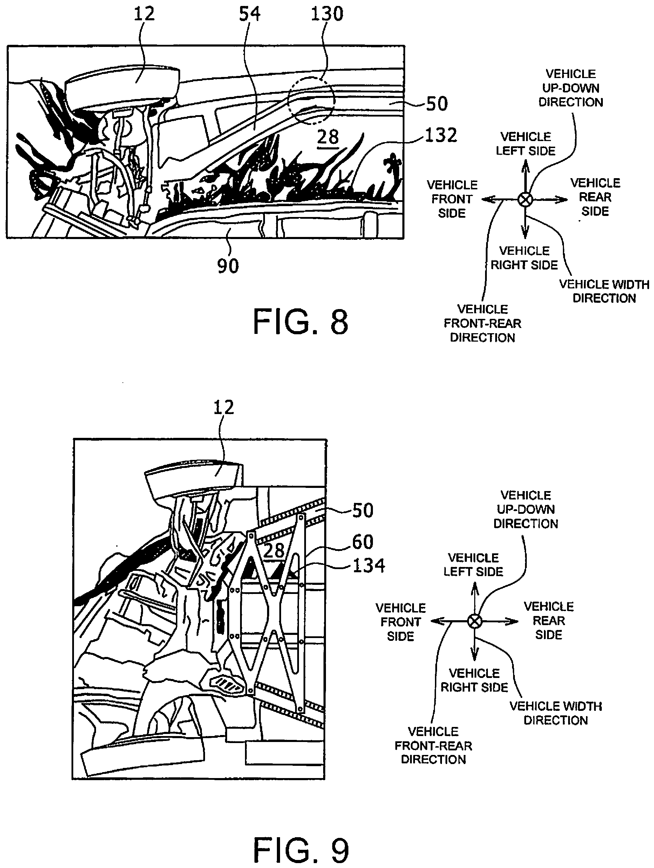

The function and effects of the above-described configuration are described in further detail with reference to FIG. 4 to FIG. 9. FIG. 4 and FIG. 5 are views showing the function and effects when the vehicle 10 is subjected to impact of an offset collision as a front collision. FIG. 6 and FIG. 7 are views showing the function and effects when the vehicle 10 is subjected to impact of a side collision. FIG. 8 and FIG. 9 are views showing simulative evaluation results.

FIG. 4 is a view showing the case where the vehicle 10 is subjected to offset impact force F0 on the vehicle left side as a front collision. Because the left side floor member 50 has the left tilted portion 54 and thus has a bent shape, the impact force is divided into two directions at a position located in the vicinity of an inflection point on the vehicle front side among inflection points of the bent shape. Accordingly, the left side floor member 50 is subjected to a bending input in the vehicle inner side direction. The bending input to which the left side floor member 50 is subjected is received by triangular truss shapes 122, 124, and 126 formed by the left side floor member 50, the tunnel left reinforcement 92, and the brace portion 60, including the polygonal truss shape 120 shown in FIG. 2. Thereby, the deformation of the left side floor member 50 is suppressed, and impact-resistant performance is improved.

FIG. 5 is a view showing that the impact force F0 to which the vehicle 10 is subjected by the offset collision is dispersed to the first brace member 62, the second brace member 64, and the third brace member 66 of the brace portion 60. The impact force F0 is dispersed to an impact force transmitting path passing through the central member 70 and the right member 74 of the first brace member 62, an impact force transmitting path passing through the second brace member 64, and an impact force transmitting path passing through the first oblique brace member 76 of the third brace member 66. The dispersed impact force is transmitted to the tunnel left reinforcement 92 as F2, transmitted to the tunnel right reinforcement 94 as F3, and transmitted to the right side floor member 52 as F4.

In FIG. 4, a bending input is received mostly by the left side floor member 50 and by the plurality of triangular and polygonal truss shapes of the brace portion 60. In contrast, in FIG. 5, the rigidity of the tunnel left reinforcement 92, the tunnel right reinforcement 94, and the right side floor member 52 also contributes to the suppression of the deformation of the left side floor member 50 by passing through the brace portion 60.

Furthermore, as described above, the impact force F0 is dispersed to a plurality of impact force transmitting paths, and the magnitude of impact force to which each impact force transmitting path is subjected is smaller than F0. That is, the impact force assigned to each of the first brace member 62, the second brace member 64, and the third brace member 66 which constitute the brace portion 60 is smaller than F0. Therefore, the cross sectional shapes of the first brace member 62, the second brace member 64, and the third brace member 66 can be smaller.

FIG. 6 is a view showing the case where the vehicle 10 is subjected to impact force F1 resulting from a side collision. Because the left side floor member 50 has the left tilted portion 54 and thus has a bent shape, the impact force is divided in two directions at a position located in the vicinity of an inflection point on the vehicle rear side among inflection points of the bent shape. Accordingly, the left side floor member 50 is subjected to a bending input in a direction different from that in the case of the offset collision in FIG. 4. The bending input to which the left side floor member 50 is subjected is received by the triangular truss shapes 122, 124, and 126 formed by the left side floor member 50, the tunnel left reinforcement 92, and the brace portion 60, including the polygonal truss shape 120 shown in FIG. 2. Thereby, the deformation of the left side floor member 50 is suppressed, and impact-resistant performance is improved.

FIG. 7 is a view showing that the impact force F1 to which the vehicle 10 is subjected by the side collision is dispersed to the first brace member 62, the second brace member 64, and the third brace member 66 of the brace portion 60. The impact force F1 is dispersed to an impact force transmitting path passing through the left member 72 and the central member 70 of the first brace member 62, an impact force transmitting path passing through the second brace member 64, and an impact force transmitting path passing through the second oblique brace member 78 of the third brace member 66. The dispersed impact force is transmitted to the tunnel left reinforcement 92 as F2, transmitted to the tunnel right reinforcement 94 as F3, and transmitted to the right side floor member 52 as F4.

As in the case of FIG. 5 for the offset collision, the rigidity of the tunnel left reinforcement 92, the tunnel right reinforcement 94, and the right side floor member 52 also contributes to the suppression of the deformation of the left side floor member 50 by passing through the brace portion 60 in FIG. 7.

Furthermore, as described above, because the impact force F1 is dispersed to a plurality of impact force transmitting paths, the magnitude of impact force to which each impact force transmitting path is subjected is smaller than F1. That is, the impact force assigned to each of the first brace member 62, the second brace member 64, and the third brace member 66 which constitute the brace portion 60 is smaller than F1. Therefore, the cross sectional shapes of the first brace member 62, the second brace member 64, and the third brace member 66 can be smaller from the perspective of being subjected to impact of a side collision as well.

Results of ascertaining the above-described function and effects by simulations are shown in FIG. 8 and FIG. 9. These drawings show simulatively obtained distributions of the deformation of the left side floor member 50 and the floor panel 28 in the case where the vehicle 10 is subjected to impact of an offset collision as a front collision. In these drawings, parts which are considerably deformed or damaged are indicated in black.

FIG. 8 is a view showing a simulation result for a vehicle body structure having no brace portion 60, as a comparative example. If the vehicle 10 is subjected to impact of an offset collision, the left side of the front structure of the vehicle 10 is damaged, and the left front wheel 12 moves to the vehicle rear side and partly runs onto the vehicle body structure. According to the result of the simulation, damage 130 is caused at an inflection point on the vehicle rear side among inflection points of the bending of the left tilted portion 54 of the left side floor member 50. Moreover, damage 132 is caused to the floor panel 28 in a large part of a region between the edge of the tunnel portion 90 and the left side floor member 50.

FIG. 9 is a view showing a simulation result for the vehicle body structure 20 having the brace portion 60. If the vehicle 10 is subjected to impact of an offset collision, the left side of the front structure of the vehicle 10 is damaged, and the left front wheel 12 moves to the vehicle rear side and partly runs onto the vehicle body structure. This part is about the same as the result in FIG. 8. FIG. 9 is different from FIG. 8 in that damage 134 caused to the floor panel 28 is much less. Almost no damage is caused to the vehicle rear side from the part shown in FIG. 9. Although not shown, no damage is caused at the inflection point of the bending of the left tilted portion 54 of the left side floor member 50 either. Thus, impact-resistant performance for the left side floor member 50, the floor panel 28, and others is improved by providing the brace portion 60 in the vehicle body structure 20 including the left side floor member 50 having the left tilted portion 54 tilted to the vehicle outer side from the vehicle front side toward the vehicle rear side in a top view.

The vehicle body structure 20 including the left side floor member 50 and the right side floor member 52 having the tilted portions tilted to the vehicle outer side from the vehicle front side toward the vehicle rear side in a top view has been described above. It has been ascertained by a simulation that, when the vehicle 10 is subjected to impact of an offset collision as a front collision, and, for example, the left front wheel 12 directly hits the left side floor member 50, the left front wheel 12 directly hits the vicinity of the position where the brace portion 60 is disposed. In view of this, it is possible to expect the function and effects of providing the brace portion 60 even in a vehicle body structure according to a conventional technique which comprises side members having no tilted portion and extending straight parallel to the vehicle front-rear direction in a top view.

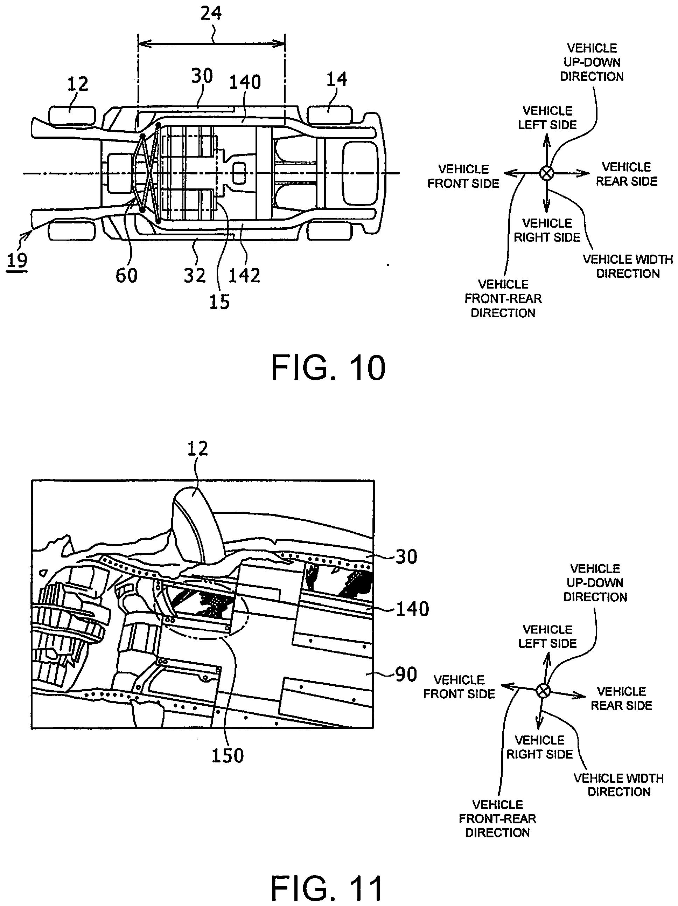

FIG. 10 is a view corresponding to FIG. 1B, and shows a vehicle body structure 19 in the case where the brace portion 60 is added to a conventional technique. In the vehicle body structure 19, a left side member 140 and a right side member 142 have no tilted portions, and extend substantially parallel to the vehicle front-rear direction throughout the vehicle interior side structure 24, in a top view. In the vehicle interior side structure 24, the brace portion 60 is provided closer to the vehicle front side than the region where a battery 15 is disposed, and connects the left side member 140 and the right side member 142.

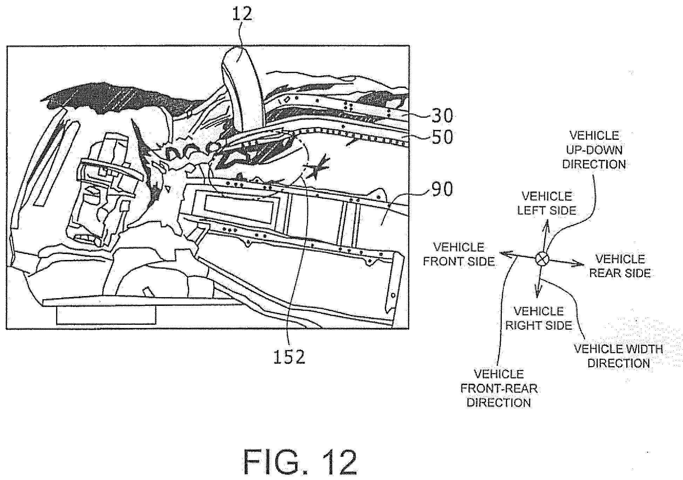

FIG. 11 shows a result of a simulation performed with regard to damage in the case where the vehicle 10 having a vehicle body structure according to the conventional technique before being provided with the brace portion 60 is subjected to impact resulting from an offset collision as a front collision, and then the left front wheel 12 directly hits the left side member 140. FIG. 12 shows a result of a simulation performed with regard to damage in the case where the brace portion 60 is removed from the vehicle body structure 20 in FIG. 1A, the vehicle 10 is subjected to impact resulting from an offset collision as a front collision, and then the left front wheel 12 directly hits the left side floor member 50. In these drawings, parts which are considerably deformed or damaged are indicated in black.

If the degrees of damage around the parts directly hit by the left front wheel 12 in FIG. 11 and FIG. 12 are compared, the position where damage 150 is caused in FIG. 11 and the position where damage 152 is caused in FIG. 12 are about the same. Together with the simulation result in FIG. 9 in the vehicle body structure 20 having the brace portion 60, it is possible to expect the function and effects of the brace portion 60 in the vehicle body structure 19 shown in FIG. 10 as well.

### REFERENCE SIGNS LIST

6: road surface, 8: user, 10: vehicle, 11: vehicle interior, 12: left front wheel, 14: left rear wheel; 15, 16: battery, 19, 20: vehicle body structure, 22: front side structure, 24: vehicle interior side structure, 26: rear side structure, 28: floor panel, 30: left rocker, 32: right rocker, 34: left front side member, 36: right front side member, 38: left rear side member, 40: right rear side member, 50: left side floor (side) member, 52: right side floor (side) member, 54: left tilted portion, 56: right tilted portion, 60: brace portion, 62: first brace member, 64: second brace member, 66: third brace member, 70: central member (central portion), 72: left member, 74: right member, 76: first oblique brace member, 78: second oblique brace member, 80, 82, 84, 86, 100, 102, 104, 106, 110, 112, 114, 116: fixing portion, 81, 85; rear end, 90: tunnel portion, 92: tunnel left reinforcement, 94: tunnel right reinforcement, 120, 122, 124, 126: truss shape, 130, 132, 134, 150, 152: damage, 140: left side member, 142: right side member.

## Claims

1. A vehicle body structure (20) comprising:
a left side floor member (50) and a right side floor member (52) having tilted portions (54, 56) tilted to a vehicle outer side from a vehicle front side toward a vehicle rear side in a top view; and
a brace portion (60) connecting a left tilted portion (54) which is the tilted portion of the left side floor member (50) and a right tilted portion (56) which is the tilted portion of the right side floor member (52).
the vehicle body structure (20) being **characterized in that**
the brace portion (60) includes
a first brace member (62) in which left and right ends respectively fixed to the left tilted portion (54) and the right tilted portion (56) are tilted toward the vehicle rear side from a central portion,
a second brace member (64) which is provided closer to the vehicle rear side than the first brace member (62) and which has left and right ends respectively fixed to the left tilted portion and the right tilted portion, and
a cross-shaped third brace member (66) which links the left end of the first brace member (62) and the right end of the second brace member (64) and links the right end of the first brace member (62) and the left end of the second brace member (64).

2. The vehicle body structure (20) according to claim 1, wherein
a left first fixing portion (80) and a left second fixing portion (82) which is closer to the vehicle rear side than the left first fixing portion are provided in the left tilted portion (54),
a right first fixing portion (84) and a right second fixing portion (86) which is closer to the vehicle rear side than the right first fixing portion are provided in the right tilted portion (56), and
in the brace portion (60),
the first brace member (62) is fixed to the left first fixing portion and the right first fixing portion,
the second brace member (64) is fixed to the left second fixing portion and the right second fixing portion, and
the third brace member (66) includes a first oblique brace member (76) fixed to the left first fixing portion and the right second fixing portion, and a second oblique brace member (78) fixed to the left second fixing portion and the right first fixing portion.

3. The vehicle body structure (20) according to claim 1 or 2, further comprising:
a tunnel portion (90) which is disposed between the left side floor member (50) and the right side floor member (52) in the vehicle width direction and which projects to a vehicle upper side with respect to a floor panel (28) and extends in a vehicle front-rear direction; and
a pair of left and right tunnel reinforcements (92, 94) respectively provided on a vehicle lower side on both edges of the vehicle width direction in the tunnel portion (90), wherein
the first brace member (62), the second brace member (64), and the third brace member (66) are fixed to each of the pair of left and right tunnel reinforcements (92, 94).

## Patentansprüche

1. Fahrzeugkarosseriestruktur (20), umfassend:
ein linksseitiges Bodenelement (50) und ein rechtsseitiges Bodenelement (52), die geneigte Abschnitte (54, 56) aufweisen, die in einer Draufsicht von einer Fahrzeugvorderseite in Richtung einer Fahrzeugrückseite zu einer Fahrzeugaußenseite geneigt sind, und
einen Strebenabschnitt (60), der einen linken geneigten Abschnitt (54), welcher der geneigte Abschnitt des linksseitigen Bodenelements (50) ist, und einen rechten geneigten Abschnitt (56), welcher der geneigte Abschnitt des rechtsseitigen Bodenelements (52) ist, verbindet,
wobei die Fahrzeugkarosseriestruktur (20) **dadurch gekennzeichnet ist, dass** der Strebenabschnitt (60) beinhaltet:
ein erstes Strebenelement (62), bei dem linke und rechte Enden, die jeweils an dem linken geneigten Abschnitt (54) und dem rechten geneigten Abschnitt (56) befestigt sind, von einem Mittelabschnitt in Richtung der Fahrzeugrückseite geneigt sind,
ein zweites Strebenelement (64), das näher an der Fahrzeugrückseite als das erste Strebenelement (62) vorgesehen ist und das linke und rechte Enden aufweist, die jeweils an dem linken geneigten Abschnitt und dem rechten geneigten Abschnitt befestigt sind, und
ein kreuzförmiges drittes Strebenelement (66), welches das linke Ende des ersten Strebenelements (62) und das rechte Ende des zweiten Strebenelements (64) verbindet und das rechte Ende des ersten Strebenelements (62) und das linke Ende des zweiten Strebenelements (64) verbindet.

2. Fahrzeugkarosseriestruktur (20) nach Anspruch 1, wobei
ein linker erster Befestigungsabschnitt (80) und ein linker zweiter Befestigungsabschnitt (82), der näher an der Fahrzeugrückseite als der linke erste Befestigungsabschnitt liegt, in dem linken geneigten Abschnitt (54) vorgesehen sind,
ein rechter erster Befestigungsabschnitt (84) und ein rechter zweiter Befestigungsabschnitt (86), der näher an der Fahrzeugrückseite als der rechte erste Befestigungsabschnitt liegt, in dem rechten geneigten Abschnitt (56) vorgesehen sind, und
in dem Strebenabschnitt (60)
das erste Strebenelement (62) an dem linken ersten Befestigungsabschnitt und dem rechten ersten Befestigungsabschnitt befestigt ist,
das zweite Strebenelement (64) an dem linken zweiten Befestigungsabschnitt und dem rechten zweiten Befestigungsabschnitt befestigt ist, und
das dritte Strebenelement (66) ein erstes schräges Strebenelement (76), das an dem linken ersten Befestigungsabschnitt und dem rechten zweiten Befestigungsabschnitt befestigt ist, und ein zweites schräges Strebenelement (78), das an dem linken zweiten Befestigungsabschnitt und dem rechten ersten Befestigungsabschnitt befestigt ist, beinhaltet.

3. Fahrzeugkarosseriestruktur (20) nach Anspruch 1 oder 2, ferner umfassend:
einen Tunnelabschnitt (90), der in der Fahrzeugbreitenrichtung zwischen dem linksseitigen Bodenelement (50) und dem rechtsseitigen Bodenelement (52) angeordnet ist, und der in Bezug auf eine Bodenplatte (28) zu einer Fahrzeugoberseite vorsteht und sich in einer Fahrzeug-Front-Heck-Richtung erstreckt, und
ein Paar linke und rechte Tunnelverstärkungen (92, 94), die jeweils an einer Fahrzeugunterseite an beiden Kanten der Fahrzeugbreitenrichtung in dem Tunnelabschnitt (90) vorgesehen sind, wobei
das erste Strebenelement (62), das zweite Strebenelement (64) und das dritte Strebenelement (66) an jedem von dem Paar linke und rechte Tunnelverstärkungen (92, 94) befestigt sind.

## Revendications

1. Structure de carrosserie de véhicule (20) comprenant :
un élément de plancher latéral gauche (50) et un élément de plancher latéral droit (52) ayant des parties inclinées (54, 56) inclinées vers un côté extérieur de véhicule depuis un côté avant de véhicule vers un côté arrière de véhicule dans une vue de dessus ; et
une partie d'armature (60) reliant une partie inclinée gauche (54) qui est la partie inclinée de l'élément de plancher latéral gauche (50) et une partie inclinée droite (56) qui est la partie inclinée de l'élément de plancher latéral droit (52).
la structure de carrosserie de véhicule (20) étant **caractérisée en ce que** la partie d'armature (60) comprend
un premier élément d'armature (62) dans lequel des extrémités gauche et droite respectivement fixées sur la partie inclinée gauche (54) et la partie inclinée droite (56) sont inclinées vers le côté arrière de véhicule par rapport à une partie centrale,
un deuxième élément d'armature (64) qui est prévu plus près du côté arrière de véhicule que le premier élément d'armature (62) et qui a des extrémités gauche et droite respectivement fixées sur la partie inclinée gauche et la partie inclinée droite, et
un troisième élément d'armature en forme de croix (66) qui lie l'extrémité gauche du premier élément d'armature (62) et l'extrémité droite du deuxième élément d'armature (64) et lie l'extrémité droite du premier élément d'armature (62) et l'extrémité gauche du deuxième élément d'armature (64).

2. Structure de carrosserie de véhicule (20) selon la revendication 1, dans laquelle
une première partie de fixation gauche (80) et une deuxième partie de fixation gauche (82) qui est plus près du côté arrière de véhicule que la première partie de fixation gauche sont prévues dans la partie inclinée gauche (54),
une première partie de fixation droite (84) et une deuxième partie de fixation droite (86) qui est plus près du côté arrière de véhicule que la première partie de fixation droite sont prévues dans la partie inclinée droite (56), et
dans la partie d'armature (60),
le premier élément d'armature (62) est fixé sur la première partie de fixation gauche et la première partie de fixation droite,
le deuxième élément d'armature (64) est fixé sur la deuxième partie de fixation gauche et la deuxième partie de fixation droite, et
le troisième élément d'armature (66) comprend un premier élément d'armature oblique (76) fixé sur la première partie de fixation gauche et la deuxième partie de fixation droite, et un deuxième élément d'armature oblique (78) fixé sur la deuxième partie de fixation gauche et la première partie de fixation droite.

3. Structure de carrosserie de véhicule (20) selon la revendication 1 ou 2, comprenant en outre :
une partie de tunnel (90) qui est disposée entre l'élément de plancher latéral gauche (50) et l'élément de plancher latéral droit (52) dans la direction de largeur de véhicule et qui dépasse vers un côté supérieur de véhicule par rapport à un panneau de plancher (28) et s'étend dans une direction avant-arrière de véhicule ; et
une paire de renforts de tunnel gauche et droit (92, 94) respectivement prévus sur un côté inférieur de véhicule sur les deux bords de la direction de largeur de véhicule dans la partie de tunnel (90),
le premier élément d'armature (62), le deuxième élément d'armature (64), et le troisième élément d'armature (66) étant fixés sur chaque renfort de la paire de renforts de tunnel gauche et droit (92, 94).
